# EUROPEAN PATENT SPECIFICATION

(11) **EP 1 995 879 B1**
(45) Date of publication and mention of the grant of the patent: **22.07.2009**
(21) Application number: 07290656.3
(22) Date of filing: 22.05.2007
(51) Int. Cl.: H04B 1/04, H04W 88/10

(54) **Base station and transmission method**
Basisstation und Übertragungsverfahren
Station de base et procédé de transmission

(43) Date of publication of application: 26.11.2008
(73) Proprietor: Alcatel Lucent, 75008 Paris (FR)
(72) Inventor: Krukenberg, Ralf, 75365 Calw (DE); Neustadt, Alf, 70180 Stuttgart (DE)
(74) Representative: Schmidt, Werner Karl

(56) References cited:
- EP-A1- 1 418 680
- US-A1- 2004 048 634
- US-A1- 2005 221 769

## Description

### Field of the invention

The present invention relates to the field of base stations, in particular to multi-standard base stations such as GSM/UMTS base stations. Furthermore, the present invention relates to a transmission method combining signals from two transmitters of such a base station.

### Background and prior art

With the introduction of UMTS and LTE, which is intended to replace UMTS, the main interest of GSM network operators is to minimize the introduction cost while keeping a high flexibility for future changes and while keeping the GSM performance more or less unchanged.

The spectrum range for the GSM900 operation is between 890 MHz and 915 MHz for uplink operation and between 935 MHz and 960 MHz for downlink operation. Furthermore, the spectrum range for the EGSM service is between 880 MHz and 910 MHz for uplink operation and between 925 MHz and 960 MHz for downlink operation. Since the cell range of UMTS900 is comparable to that of GSM900 and EGSM, the main savings for the operators would be to use the existing GSM900/EGSM antennas and feeders also for UMTS/LTE900. For each antenna there is usually a filter-duplexer which separates between transmit and receive band, so that there is one transmit path for each antenna. As long as the number of transmitters is less than or equal to the number of transmit paths (antennas), each transmitter can be directly connected to said duplexer. In usual sites, there are two antennas per sector and so GSM stations with up to two transmitters per sector allow direct connection. Such configuration has a relatively low loss.

However, if it is required to add a UMTS/LTE transmitter to a GSM base station (BTS) which has already two transmitters, the main question is how the transmitters could be combined. In order to combine the signals of two transmitters, two different methods are known.

In a first method hybrid combiners, which are also known as wideband combiners, are used to combine two signals from two transmitters. Such a combiner is wideband, i.e. not frequency selective, and has a principle loss of (n-1)/n where n is the number of inputs to combine. Such combiners are used for a sector with two GSM transmitters and one UMTS/LTE transmitter, so that either the two GSM transmitters or one GSM transmitter and the UMTS/LTE transmitter are combined. If the same coverage, i.e. the same output power, is required as before the addition of the UMTS/LTE transmitter, new GSM transmitters with two times the output power must be used. Furthermore, if one GSM transmitter and one UMTS/LTE transmitter are combined, said transmitters must be high power transmitters or the principle of "concentric cells" is used. That is, far away mobiles are allocated to the GSM transmitter without combiner and the other transmitter is used for mobiles with better radio conditions.

In a further method filter combiners are used for splitting between the frequencies used for the two signals, wherein said filter combiners can be either tunable or fixed. The term tunable refers to the operation which can be done in the field. Tunable filters are usually single pole filters. Multipole filters are usually called fixed filters, since they require complex tuning procedures and measurement equipment and a lot of experience for the tuning process. The number of poles determines how much "gap" band is needed between several filter inputs. For single pole filters, this gap is at least as large as the pass band bandwidth. Even though the approach of splitting between the frequencies used for the two signals provides the benefit that the GSM and UMTS transmitters have a low loss, said approach has significant disadvantages. The filters must be tailored to the frequencies used on the site. That is, changing frequency allocation requires the replacement of the filters. Furthermore, the filters are site specific and customer specific. Therefore, there are probably long ordering times and complex logistics. A further disadvantage of such solution is that the filters are costly.

In case where no combining is used, but all antennas are already in use, a tuned filter combiner can be used. The GSM transmitters are combined with the filter combiner on one antenna, and the other antenna is used for UMTS/LTE. This works well as long as GSM frequency hopping is not used. However, due to the tuned filter it is not possible to use the quite attractive generalized frequency hopping, that is a frequency hopping where the BCCH transmitter is not hopping at all and the other transmitter uses hopping over many frequencies.

Connecting one GSM transmitter to one antenna and using a tuned combiner for combining the other GSM transmitter and the UMTS/LTE transmitter has the disadvantage that due to the gap band required for it, which is at least 5 MHz for a 5 MHz UMTS signal, a big part of the GSM band is unusable. Operators usually own 12,5 MHz which is one half of the 25 MHz band. Having 5 MHz for UMTS plus 5 MHz gap leaves nearly no room for GSM, which makes this solution impossible.

US 2005/0221769 A1 shows a high-frequency switch module including a branching filter circuit. Said branching filter circuit comprises first and second filter circuits for dividing a signal. For example, the first filter circuit is a band-pass filter and the second filter circuit is a notch filter. EP 1 418 680 A1 shows a multi-band antenna switch circuit including a diplexer connected to an antenna terminal for demultiplexing signals of different passing bands. US 2004/0048634 A1 shows a high-frequency hybrid switch module for two different communications systems using two different frequencies.

It is an object of the present invention to provide a transmission method combining two signals from two transmitters with relatively low loss and a multi-standard base station for carrying out said transmission method.

### Summary of the invention

The invention is defined by the features of the independent claims. Further embodiments are defined in the dependent claims. According to the present invention a band-pass filter and a notch filter are used to combine the signals from two transmitters, wherein both filters are tuned to the same frequency. In particular, the present invention provides a transmission approach for multi-standard base stations. Preferably, such multi-standard base station is a GSM/UMTS base station comprising at least one GSM transmitter and at least one UMTS/LTE transmitter. In said GSM/UMTS base station the band-pass filter is used for the GSM BCCH carrier and the notch filter is intended for either a potentially hopping GSM carrier or a UMTS/LTE carrier. That is, a first path of the combining means contains a tunable notch filter for a frequency hopping GSM carrier or a WCDMA signal and a second path contains a tunable band-pass filter for a frequency fixed GSM BCCH carrier. After combining the filter outputs the combined signal is adapted to be transmitted through an antenna of the multi-standard base station.

The proposed combining principle for two GSM carriers or one GSM carrier and one UMTS carrier gives a significant improvement of the transmitted power level. Thus, an operator of a BTS system has a better range coverage or signal respectively data quality, since the present invention provides an increased RF output power of a multi-standard base station and therefore offers a possibility to increase the transmitted RF level without raising the power output of a transmitter amplifier. Furthermore, the combining principle according to the present invention offers low losses of approximately 0,8 dB or even lower both on the band-pass path and the notch path. In particular, these low losses do not cause significant coverage reduction. With respect to the above-mentioned prior art solutions the combination of band-pass filter and notch filter is used instead of the wideband combiner and can be easily implemented in existing BTS systems.

With respect to tuning of the filters different methods can be used. In principle, manual tuning filters can be used. During commissioning of the base station the filters are manually tuned in the following manner. The hopping transmitter is configured to send on the BCCH frequency and the notch filter is tuned manually to have the minimum output power after the filter. The hopping transmitter is switched off and the BCCH transmitter is activated. The band-pass filter is tuned to get the maximum output power after the filter. This process needs probably two or three cycles. However, manual tuning requires a site visit each time the frequency plan of the operator changes.

In a preferred embodiment of the present invention the band-pass and notch filters are remotely tuned. More preferably the remote tuning is performed automatically. Contrary to manual tuning, site visits can be avoided when the filters are remotely tuned. Furthermore, tuning motors, processors and other necessary equipment is not too expensive, so that cost reduction is achieved by remote tuning. By automatically tuning the filters a further cost reduction is achieved. Automatic tuning means consist for example of motorized filters, selective receivers and a processor.

Tuning methods of band-pass filters are known and can comprise the following steps. At first the desired band-pass frequency and a factory table are used to calculate a rough tuning position for each frequency. Then, fine tuning is done, for example, by maximizing the output power while varying the tuning around the calculated rough tuning position. Furthermore, this can be done by searching the upper and lower-n dB points and taking the middle position between these points. In addition, the signal phase can be observed for fine tuning. Preferably the tuning process is only carried out if the module gets RF power. In this manner wrong tunings and unnecessary actions are avoided.

According to the present invention tuning of a notch filter is provided, which is part of a base station. Tuning of the notch filter can be carried out in two ways. According to a first way the notch filter is mechanically coupled to the band-pass filter so that the automatic tuning of the band-pass filter will automatically tune the notch filter. There is no requirement on the presence of signals on the notch input. This method requires a good mechanical matching over the full tuning range, temperature, and lifetime of the module comprising both the band-pass filter and the notch filter.

Alternatively, the notch is tuned separately from the band-pass. Rough tuning can use a factory table as for the band-pass, wherein fine tuning can be carried out by several methods. According to a first method a process as described for the manual tuning is used. This method has the advantage that only one measurement point is needed, but can not be done during normal operation. That is, retuning would require a traffic interruption. This first method is particularly useful if the mechanical stability is good enough to avoid any retuning except in case of a frequency change.

According to a further method a frequency selective power measurement at the connection of the notch filter to the transmitter is used. Additionally, the phase can be measured. The measurement is done on the frequency of the other transmitter and the tuning process minimizes the feed through power of the other transmitter.

According to a still further method the power at the band-pass filter connection to the load is measured at the other transmitter frequency and the tuning process tries to maximize this power, if the notch is build by using a band-pass filter and a circulator.

Even though a notch filter and a band-pass filter must be integrated in a multi-standard base station to carry out the present invention, existing GSM transmitters can be kept in said base station. A further advantage of the present invention is that there is no need for a high power UMTS transmitter and that the present invention provides for lower power consumption and dissipation. In particular, the present invention provides for a low loss transmission method combining signals from two transmitters.

These and other aspects of the invention will be apparent from and elucidated with reference to the embodiments thereafter. It should be noted that the use of reference signs shall not be construed as limiting the scope of the invention.

### Brief description of the drawings

- Figure 1: shows a block diagram of a multi-standard base station according to the present invention;
- Figure 2: shows the multi-standard base station of figure 1 further comprising a controller; and
- Figure 3: shows a base station with three narrow band transmitters and one wide band transmitter.

### Detailed description of the drawings

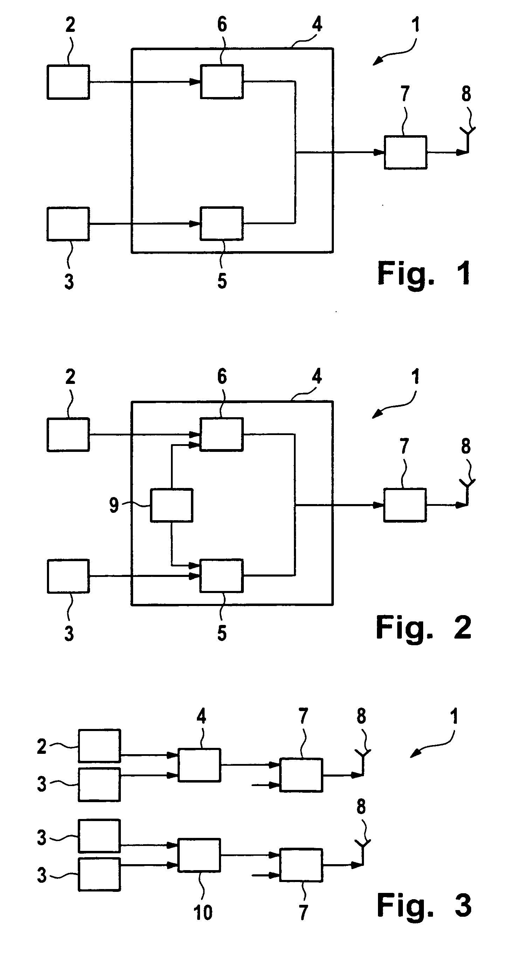

Figure 1 shows a block diagram of a multi-standard base station 1 according to the present invention. Said base station has at least two transmitters 2, 3 and the RF signal power delivered by each of the transmitters is fed into a module 4. According to the present invention said module 4 comprises a band-pass filter 5 and a notch filter 6. In the case of a GSM/UMTS base station the transmitter 2 outputs a hopping GSM signal or a WCDMA signal and the further transmitter 3 outputs a GSM BCCH signal. The GSM BCCH signal passes the band-pass filter 5 and the hopping GSM signal or the WCDMA signal is fed through the notch path comprising the notch filter 6 to the output port.

When expanding a GSM base station to be used as multi-standard base station 1 said module 4 comprising the combination of a band-pass filter 5 and a notch filter 6 can be easily integrated therein. Said module 4 acts as a combiner having two inputs and one output wherein at least one of the inputs is adapted to receive a GSM signal and the further input may receive a hopping GSM signal or a WCDMA signal. Thus, the combiner 4 basically consists of a notch path and a band-pass path comprising the notch filter 6 and the band-pass filter 5, respectively. In particular, said module 4 is adapted to combine two GSM signals or one GSM and one WCDMA signal to one output.

After the outputs of the band-pass filter 5 and the notch filter 6 are combined within the module 4, the module output is fed to an appropriate means 7 for adapting the combined output signal to be transmitted through an antenna 8 of the multi-standard base station 1.

Figure 2 shows the multi-standard base station of figure 1 further comprising a controller 9. In particular, the controller 9 is adapted to tune the band-pass filter 5 and the notch filter 6 to the same frequency, which is essential with respect to the present invention. For example, said controller 9 can tune said filters 5, 6 to a desired center frequency by means of an integrated processor (not shown). Furthermore, a tuning trigger signal can be input into the controller 9. When tuning the band-pass and the notch branches in parallel it is assumed that both branches have the same mechanical, thermal and electrical behavior.

Figure 3 shows a further embodiment of a multi-standard base station 1 according to the present invention. Said base station comprises two antennas 8, three narrow band transmitters 3, and one wide band transmitter 2. In the case of a GSM/UMTS base station 1 such configuration allows one low loss connection for the UMTS transmitter 2, one low loss connection for a GSM transmitter 3, and two higher loss connections for further GSM transmitters 3. The upper part of the multi-standard base station of figure 3 corresponds to the multi-standard base station 1 explained with respect to figure 1. The lower part of the base station 1 of figure 3 consists of two GSM transmitters 3, a wideband combiner 10, a means 7 for adapting the output of the combiner 10, and an antenna 8 for transmitting the combined signal output of the combiner 10. The configuration according to figure 3 can be used with a so called "concentric cell" behavior for GSM. The low loss GSM transmitter 2 is used for the broadcast carrier and for mobiles with high path loss and the other mobiles can use any GSM transmitter 3.

### List of reference numerals

- 1: base station
- 2: transmitter
- 3: transmitter
- 4: module
- 5: band-pass filter
- 6: notch filter
- 7: means for adapting a combined output
- 8: antenna
- 9: controller
- 10: wideband combiner

## Claims

1. Transmission method combining signals from two transmitters, the method comprising the steps of:
- providing the signal of a first transmitter (3) to a band-pass filter (5),
- providing the signal of a second transmitter (2) to a notch filter (6),
- tuning the band-pass filter (5) and the notch filter (6) to the same frequency, and
- combining the outputs of the band-pass filter (5) and the notch filter (6),
**characterized in that**
- the first transmitter (3) is a GSM transmitter and the respective signal is a GSM BCCH carrier,
- the second transmitter (2) is
○ a GSM transmitter and the respective signal is a hopping GSM carrier or
○ a UMTS/LTE transmitter and the respective signal is a UMTS/LTE carrier, and
- the GSM BCCH carrier is provided to the band-pass filter (5) and the hopping GSM carrier or the UMTS/LTE carrier is provided to the notch filter (6).

2. The transmission method according to claim 1, further comprising the step of providing the combined output signal to means (7) adapting said combined output signal for transmission through an antenna (8).

3. The transmission method according to claim 1, wherein the tuning step is performed by automatic tuning means (9).

4. The transmission method according to claim 1, wherein the tuning step is done by mechanically coupling the notch filter (6) to the band-pass filter (5).

5. The transmission method according to claim 1, wherein the tuning step is done by separately tuning the band-pass filter (5) and the notch filter (6).

6. Base station comprising at least first and second transmitters and means for carrying out the transmission method according to any of the preceding claims.

## Patentansprüche

1. Übertragungsverfahren, welches Signale von zwei Sendern kombiniert, wobei das Verfahren die folgenden Schritte umfasst:
- Bereitstellen des Signals eines ersten Senders (3) an einen Bandpassfilter (5),
- Bereitstellen des Signals eines zweiten Senders (2) an einen Kerbfilter (6),
- Abstimmen des Bandpassfilters (5) und des Kerbfilters (6) auf dieselbe Frequenz, und
- Kombinieren der Ausgänge des Bandpassfilters (5) und des Kerbfilters (6),
**dadurch gekennzeichnet, dass**
- der erste Sender (3) ein GSM-Sender und das entsprechende Signal ein GSM BCCH-Träger ist
- der zweite Sender (2)
○ ein GSM-Sender und das entsprechende Signal ein Hopping-GSM-Träger oder
○ ein UMTS/LTE-Sender und das entsprechende Signal ein UMTS/LTE-Träger ist, und
- der GSM BCCH-Träger an den Bandpassfilter (5) und der Hopping-GSM-Träger oder der UMTS/LTE-Träger an den Kerbfilter (6) bereitgestellt wird.

2. Das Übertragungsverfahren nach Anspruch 1, weiterhin umfassend den Schritt des Bereitstellens des kombinierten Ausgangssignals an ein Mittel (7), welches das besagte Ausgangssignal für die Übertragung über eine Antenne (8) anpasst.

3. Das Übertragungsverfahren nach Anspruch 1, wobei der Schritt des Abstimmens durch ein automatisches Abstimmungsmittel (9) erfolgt.

4. Das Übertragungsverfahren nach Anspruch 1, wobei der Schritt des Abstimmens durch das mechanische Koppeln des Kerbfilters (6) an den Bandpassfilter (5) erfolgt.

5. Das Übertragungsverfahren nach Anspruch 1, wobei des Schritt des Abstimmens durch das separate Abstimmen des Bandpassfilters (5) und des Kerbfilters (6) erfolgt.

6. Basisstation, welche mindestens einen ersten und einen zweiten Sender und Mittel zum Ausführen des Übertragungsverfahrens gemäß einem beliebigen der vorstehenden Ansprüche umfasst.

## Revendications

1. Procédé de transmission combinant les signaux issus de deux émetteurs, le procédé comprenant les étapes consistant à :
- fournir le signal d'un premier émetteur (3) à un filtre passe-bande (5),
- fournir le signal d'un deuxième émetteur (2) à un filtre coupe-bande (6),
- accorder le filtre passe-bande (5) et le filtre coupe-bande (6) sur la même fréquence, et
- combiner les sorties du filtre passe-bande (5) et du filtre coupe-bande (6), **caractérisé en ce que**
- le premier émetteur (3) est un émetteur GSM et le signal respectif est une porteuse BCCH GSM,
- le second émetteur (2) est
□ un émetteur GSM et le signal respectif est une porteuse GSM à sauts ou
□ un émetteur UMTS/LTE et le signal respectif est une porteuse UMTS/LTE, et
- la porteuse BCCH GSM est fournie au filtre passe-bande (5) et la porteuse GSM à sauts ou la porteuse UMTS/LTE est fournie au filtre coupe-bande (6).

2. Procédé de transmission selon la revendication 1, comprenant également l'étape consistant à fournir le signal de sortie combiné à un moyen (7) adaptant ledit signal de sortie combiné pour la transmission au moyen d'une antenne (8).

3. Procédé de transmission selon la revendication 1, dans lequel l'étape d'accord est effectuée par un moyen d'accord automatique (9).

4. Procédé de transmission selon la revendication 1, dans lequel l'étape d'accord est effectuée en couplant mécaniquement le filtre coupe-bande (6) au filtre passe-bande (5).

5. Procédé de transmission selon la revendication 1, dans lequel l'étape d'accord est effectuée en accordant séparément le filtre passe-bande (5) et le filtre coupe-bande (6).

6. Station de base comprenant au moins les premier et second émetteurs et un moyen pour exécuter le procédé de transmission selon l'une quelconque des revendications précédentes.
